# EUROPÄISCHE PATENTSCHRIFT

(11) **EP 2 655 903 B1**
(45) Veröffentlichungstag und Bekanntmachung des Hinweises auf die Patenterteilung: **04.03.2015**
(21) Anmeldenummer: 11794781.2
(22) Anmeldetag: 15.12.2011
(51) Int. Cl.: F16B 37/08, F16B 2/08, F16G 11/00

(54) **KLEMMSPALTMUTTER**
CLAMPING GAP NUT
ECROU DE SERRAGE A ESPACEMENT

(30) Priorität: 21.12.2010 DE 102010063710
(43) Veröffentlichungstag der Anmeldung: 30.10.2013
(73) Patentinhaber: Aktiebolaget SKF, 415 50 Göteborg (SE)
(72) Erfinder: SEUBERLING, Mathias, 97633 Großeibstedt (DE)
(74) Vertreter: Schonecke, Mitja
(86) Internationale Anmeldenummer: PCT/EP2011/072839
(87) Internationale Veröffentlichungsnummer: WO 2012/084666

(56) Entgegenhaltungen:
- DE-A1- 3 028 609
- DE-A1- 10 162 910
- DE-U1- 29 503 403
- GB-A- 2 288 205

## Beschreibung

Die Erfindung betrifft eine Klemmspaltmutter aufweisend einen Grundkörper in Form eines umfangsoffenen Rings, der eine Außenmantelwand, eine Innenmantelwand mit einem Innendurchmesser und zwei voneinander beabstandete, aufeinander zuweisende, einen Spalt des umfangsoffenen Rings begrenzende Spaltwände aufweist, die mittels einer Spannvorrichtung gegeneinander verstellbar sind.

Die DE 101 62 910 A1 beschreibt eine Klemmspaltmutter umfassend ein Innengewinde um eine Längsachse der Klemmspaltmutter, wenigstens zwei Spaltenden, die tangential einander zugewandt sind und einen Spalt zwischen sich bilden, und wenigstens ein Spannelement, das mit jedem der Spaltenden verbunden ist, um auf die Spaltenden eine Kraft auszuüben, die eine Relativbewegung der Spaltenden in tangentialer Richtung bewirkt, wobei das wenigstens eine Spannelement mit wenigstens einem der Spaltenden winkelbeweglich über ein Gelenk verbunden ist, das eine durch die Relativbewegung der Spaltenden verursachte Richtungsänderung der Kraft ausgleicht.

Aufgabe der Erfindung ist es, eine Klemmspaltmutter mit einer verbesserten Spannwirkung zu schaffen.

Die Aufgabe der Erfindung wird gelöst durch eine Klemmspaltmutter aufweisend einen Grundkörper in Form eines umfangsoffenen Rings, der eine Außenmantelwand, eine Innenmantelwand mit einem Innendurchmesser und zwei voneinander beabstandete, aufeinander zuweisende, einen Spalt des umfangsoffenen Rings begrenzende Spaltwände aufweist, die mittels einer Spannvorrichtung gegeneinander verstellbar sind, wobei die Spannvorrichtung wenigstens ein sich flexibel um wenigstens einen den Spalt überbrückenden Umfangsabschnitt des Grundkörpers legendes Zugmittel aufweist.

Indem die Spannvorrichtung wenigstens ein sich flexibel um wenigstens einen den Spalt überbrückenden Umfangsabschnitt des Grundkörpers liegendes Zugmittel aufweist, kann eine homogen verteilte radiale Spannung auf den Umfang des Rings aufgebracht werden. In Folge kann innerhalb des Ringes der Klemmspaltmutter eine gleichmäßigere Spannungsverteilung erreicht werden. Im Ergebnis kann die Klemmspaltmutter gleichmäßiger auf das Gegengewindebauteil aufgespannt werden.

Die Klemmspaltmutter kann insbesondere einen Grundkörper in Form eines umfangsoffenen Rings aufweisen, der eine Außenmantelwand, eine insbesondere ein Innengewinde tragende Innenmantelwand mit einem Innendurchmesser und zwei voneinander beabstandete, aufeinander zuweisende, einen Spalt des umfangsoffenen Rings begrenzende Spaltwände aufweist, die zur Veränderung des Innendurchmessers der Innenmantelfläche und/oder zur Veränderung einer Spaltweite des Spalts mittels einer Spannvorrichtung gegeneinander verstellbar sind, wobei die Spannvorrichtung wenigstens ein sich flexibel und/oder biegsam um wenigstens einen den Spalt überbrückenden, insbesondere außen an der Außenmantelwand des Rings oder innen im Ring liegenden Umfangsabschnitt des Grundkörpers legendes Zugmittel aufweist. Alternativ oder ergänzend zu einem Innengewinde an der Innenmantelwand des umfangsoffenen Rings kann die Klemmspaltmutter an der Außenmantelwand ein Außengewinde aufweisen.

Der Grundkörper in Form eines umfangsoffenen Rings kann aus einem geschlossen hohlzylindrischen Rohrabschnitt gebildet sein, in den an einer Stelle des Rings in einer senkrecht zur Umfangsrichtung des Rings verlaufenden Ebene eine Aussparung vorgesehen ist. Die Aussparung bildet den Spalt und kann beispielsweise durch spannende Bearbeitung, wie radiales Einsägen oder durch thermische Bearbeitung, wie Laserschneiden oder Brennen erzeugt werden.

Der Spalt wird von Spaltwänden begrenzt, die durch zwei aufeinender weisende Stirnseiten des umfangsoffenen Rings gebildet werden. Der umfangsoffene Ring ist federelastisch derart biegsam, dass sein Innendurchmesser durch elastisches Verformen des Ringes verkleinert werden kann. Dabei wird der Spalt verengt, d.h. die beiden aufeinender weisenden Stirnseiten des umfangsoffenen Rings bzw. die Spaltwände werden aufeinander zu bewegt. Der Spalt kann mittels der Spannvorrichtung verengt werden. Dies bedeutet, dass mittels der Spannvorrichtung die beiden aufeinender weisenden Stirnseiten des umfangsoffenen Rings aufeinander zu bewegt werden können, wodurch sich der Innendurchmesser des Rings verkleinert.

Um den Spalt verengen zu können, überbrückt das flexible und/oder elastische Zugmittel den Spalt. Das flexible und/oder elastische Zugmittel muss nicht notweniger Weise über seine gesamte Länge, über die es entlang des Umfangsabschnitts des Grundkörpers anliegt, flexibel und/oder elastisch ausgebildet sein. Vielmehr kann es ausreichend sein, wenn das Zugmittel nur abschnittsweise, insbesondere nur über einen Teilabschnitt oder mehrere beabstandete Teilabschnitte seiner gesamten Länge flexibel und/oder elastisch ausgebildet ist. Andere Teilabschnitte können gegebenenfalls auch starr ausgebildet sein. Vorzugsweise ist das Zugmittel jedenfalls in einem den Spalt überbrückenden Teilabschnitt flexibel und/oder elastisch ausgebildet. Insbesondere kann das Zugmittel vollständig, d.h. über seine gesamte Länge, über die es entlang des Umfangsabschnitts des Grundkörpers anliegt, flexibel und/oder elastisch ausgebildet sein.

Die Spannvorrichtung mittels der die Spaltwände des Spalts gegeneinander verstellbar sind, kann ausgebildet sein, den Spalt zu verkleinern und/oder den Spalt zu vergrößern.

Die Spannvorrichtung kann ein an einer ersten Umfangsstelle des Rings befestigtes erstes Zugmittelende und ein zweites Zugmittelende aufweisen, das bezüglich einer zweiten Umfangsstelle des Rings verstellbar gelagert ist.

Alternativ oder ergänzend zur Spannvorrichtung kann das wenigstens ein Zugmittel ein an einer ersten Umfangsstelle des Rings befestigtes erstes Zugmittelende und ein zweites Zugmittelende, das bezüglich einer zweiten Umfangsstelle des Rings verstellbar gelagert ist, aufweisen.

Die Zugmittelenden können durch Endabschnitt eines einteiligen Zugmittels gebildet werden. Alternativ oder ergänzend zur einteiligen Ausbildung kann eines oder können beide Zugmittelenden von separaten Endstücken gebildet werden, die mit dem Zugmittel verbunden sind.

Die Spannvorrichtung kann eine Verstellvorrichtung aufweisen, die ausgebildet ist, die Länge des wenigstens einen Zugmittels zwischen der ersten Umfangsstelle des Rings und der zweiten Umfangsstelle des Rings zu verändern. Die Spannvorrichtung kann insbesondere eine Verstellvorrichtung aufweisen, die ausgebildet ist, die Länge des wenigstens einen Zugmittels zwischen der ersten Umfangsstelle des Rings und der zweiten Umfangsstelle des Rings zu verkürzen. Durch ein Verkürzen des Zugmittels zwischen der ersten Umfangsstelle des Rings und der zweiten Umfangsstelle des Rings wird der Spalt verkleinert und in Folge dessen der Innendurchmesser des Rings reduziert.

Die Verstellvorrichtung kann einen mit der zweiten Umfangsstelle des Rings verbundenen Sitz aufweisen, an dem ein Stellmittel längenverstellbar gelagert ist, wobei das Stellmittel mit dem zweiten Zugmittelende des Zugmittels verbunden ist. Das Stellmittel kann dazu dienen, das Zugmittel zwischen der ersten und zweiten Umfangsstelle zu verkürzen. Dies kann dadurch erfolgen, dass das zweite Zugmittelende bezüglich der zweiten Umfangsstelle verschoben wird. Zum Verschieben stützt sich das Stellmittel an dem Sitz ab, der mit der zweiten Umfangsstelle des Rings verbunden ist.

Die Verstellvorrichtung kann einen mit der zweiten Umfangsstelle des Rings verbundenen Sitz, insbesondere Innengewindesitz aufweisen, an dem ein Stellmittel längenverstellbar, insbesondere drehbar mittels eines Außengewindes längenverstellbar gelagert ist, wobei das zweite Zugmittelende an dem Stellmittel gelagert ist.

In einer beispielhaften Ausführung kann das Stellmittel von einer Kronenmutter gebildet werden, die ein Außengewinde aufweist. Mittels des Außengewindes ist die Kronenmutter in einem Innengewinde, das an der zweiten Umfangsstelle des Rings vorgesehen ist längsverstellbar gelagert. Das Innengewinde an der zweiten Umfangsstelle kann an einer Innenwand einer tangential verlaufenden Sackbohrung am Ring ausgebildet sein. Die Kronenmutter kann an einer von außen zugänglichen Kopfseite mit einem Schlüsselansatz, wie beispielsweise Kronenvorsprünge versehen sein, an denen eine korrespondierender Schlüssel in Art eines Schraubendrehers angesetzt werden kann, um die Kronenmutter in dem Ring in einer im Wesentlichen tangential verlaufenden Richtung längsverstellen, d.h. in axialer Erstreckung der Kronenmutter verstellen zu können.

Ergänzend kann die Verstellvorrichtung eine Aufnahme aufweisen, an der eine Außenwand eines Aufnahmenippels des zweiten Zugmittelendes formschlüssig gehalten ist. Beispielsweise kann die Verstellvorrichtung auch eine Aufnahme aufweisen, an der eine Außenwand eines Aufnahmenippels des zweiten Zugmittelendes formschlüssig, bezüglich des Stellmittels jedoch verdrehbar gehalten ist. Durch die zwar in Zugrichtung formschlüssige, bezüglich des Stellmittels jedoch verdrehbare Lagerung, kann das Zugmittel bezüglich der zweiten Umfangsstelle des Rings durch Drehen der Verstellvorrichtung verkürzt werden, durch die bezüglich des Stellmittels jedoch verdrehbare Lagerung ist vermieden oder sogar ganz verhindert, dass das Zugmittel sich mit dem Stellmittel mitdreht. Folglich ist eine unerwünschte Torsion des Zugmittels vermieden oder sogar ganz verhindert.

In einer beispielhaften Ausführung kann das Stellmittel eine Aufnahme mit einer keil- oder kegelstumpfförmigen Innenwand aufweisen, an der eine keil- oder kegelstumpfförmige Außenwand eines Aufnahmenippels des zweiten Zugmittelendes formschlüssig, bezüglich des Stellmittels jedoch verdrehbar gehalten ist. Beispielsweise kann das Stellmittel auch eine Aufnahme aufweisen, an der eine Außenwand eines Aufnahmenippels des zweiten Zugmittelendes formschlüssig, bezüglich des Stellmittels jedoch verdrehbar gehalten ist. Durch die zwar in Zugrichtung formschlüssige, bezüglich des Stellmittels jedoch verdrehbare Lagerung, kann das Zugmittel bezüglich der zweiten Umfangsstelle des Rings durch Drehen der Verstellvorrichtung verkürzt werden, durch die bezüglich des Stellmittels jedoch verdrehbare Lagerung ist vermieden oder sogar ganz verhindert, dass das Zugmittel sich mit dem Stellmittel mitdreht. Folglich ist eine unerwünschte Torsion des Zugmittels vermieden oder sogar ganz verhindert. Durch eine Aufnahme mit einer keil- oder kegelstumpfförmigen Innenwand in Verbindung mit einer keil- oder kegelstumpfförmigen Außenwand des Aufnahmenippels des zweiten Zugmittelendes kann eine in Zugrichtung formschlüssige, bezüglich des Stellmittels jedoch verdrehbare Lagerung des zweiten Zugmittelendes verbessert sein.

In allen Ausführungen der Klemmspaltmutter kann das erste Zugmittelende einen Halteabschnitt, insbesondere einen Nippel aufweisen, der an einem Gegenhalteabschnitt, insbesondere einer Nippelaufnahme an der ersten Umfangsstelle des Rings formschlüssig gehalten ist.

In allen Ausführungen der Klemmspaltmutter kann das Zugmittel um einen Umfangsabschnitt des Grundkörpers geführt sein, der wenigstens 180 Grad, insbesondere wenigstens 270 Grad des Umfangs des Grundkörpers umfängt.

In allen Ausführungen der Klemmspaltmutter kann der umfangsoffene Ring einen verstärkten Ringabschnitt aufweisen, der gegenüber einem vom Zugmittel umfangenen Ringabschnitt einen vergrößerten Querschnitt aufweist. Durch einen verstärkten Ringabschnitt, d.h. durch einen verstärkten Ringabschnitt, der nicht von dem Zugmittel umfangen ist, der aber gegenüber einem vom Zugmittel umfangenen Ringabschnitt einen vergrößerten Querschnitt aufweist, kann die Festigkeit, insbesondere die Steifheit des Rings in diesem vom Zugmittel nicht umfangenen Ringabschnitt erhöht werden. Gleichzeitig kann durch den verstärkten Ringabschnitt, d.h. durch einen verstärkten Ringabschnitt, der nicht von dem Zugmittel umfangen ist, mehr Bauraum geschaffen werden, um eine Aufnahme für das Stellmittel an der zweiten Umfangsstelle des Rings und/oder um einen Halteabschnitt, insbesondere eine Nippelaufnahme für das erste Zugmittelende an der ersten Umfangsstelle des Rings vorsehen zu können.

In allen Ausführungen der Klemmspaltmutter kann das Zugmittel wenigstens einen Zugmittelabschnitt aufweisen, der durch ein Seil, insbesondere ein Stahlseil, einen Draht, insbesondere Stahldraht, eine Kette, ein Nylon- oder Metallband, insbesondere Stahlband und/oder Federstahlband gebildet wird.

Dabei kann das Zugmittel und/oder der wenigstens eine Zugabschnitt in einer Nut, insbesondere in einer an den Querschnitt des Zugmittels und/oder an den Querschnitt des wenigstens einen Zugmittelabschnitts angepassten Nut der Außenmantelwand des Rings geführt gelagert sein.

In allen Ausführungen kann zwischen dem Zugmittel und dem Stellmittel ein Kun gelgelenk oder Pfannengelenk ausgebildet sein. Kugelgelenk oder Pfannegelenk kann ausgebildet sein, durch eine gelenkige Anbindung unerwünschte Biegespannungen an der Verstellvorrichtung und dem Zugmittel zumindest zu verringern, wenn nicht sogar ganz zu verhindern. Dadurch kann erreicht werden, dass das Innengewinde der Kronenmutter zumindest im Wesentlichen nur auf Zug belastet wird.

Zusammenfassend kann die Erfindung somit unter anderem eine Lösung bereitstellen für eine Klemmspaltmutter. Die Klemmspaltmutter kann erfindungsgemäß mit einer Trosse versehen sein. Die Klemmspaltmutter kann insoweit eine Gürtelmutter bilden. Klemmspaltmuttern können unter anderem zur axialen Fixierung von Wälzlagern eingesetzt werden. In erster Linie kann dies bei Großlagern erfolgen, da hier der Einsatz normaler Wellenmuttern nicht mehr praktikabel ist. Durch eine Verspannung mit einer Trosse kann eine homogenere radiale Verspannung am Umfang erreicht werden, als bei bekannten Klemmspaltmuttern mit starren Schaftschrauben. Die Erfindung kann das Problem der inhomogenen Verspannungen am Umfang vermindern oder sogar ganz beseitigen. Die Erfindung kann beispielsweise vorgesehen werden für eine axiale Fixierung von Großlagern. Die Erfindung kann jedoch auch geeignet sein für eine axiale Fixierung von sonstigen Wellenbauteilen.

Ein Ausführungsbeispiel der Erfindung ist exemplarisch in den beigefügten schematischen Zeichnungen dargestellt. Es zeigen:
- Fig. 1: eine perspektivische Ansicht einer erfindungsgemäßen Klemmspaltmutter mit einem flexiblen Zugmittel,
- Fig. 2: einen Ansicht im Querschnitt durch die Klemmspaltmutter mit dem flexiblen Zugmittel gemäß Fig. 1,
- Fig. 3a: eine vergrößerte Teilschnittansicht einer Spannvorrichtung der Klemmspaltmutter in einem unverspannten Zustand,
- Fig. 3b: eine vergrößerte Teilschnittansicht der Spannvorrichtung gemäß Fig. 3a in einem verspannten Zustand.

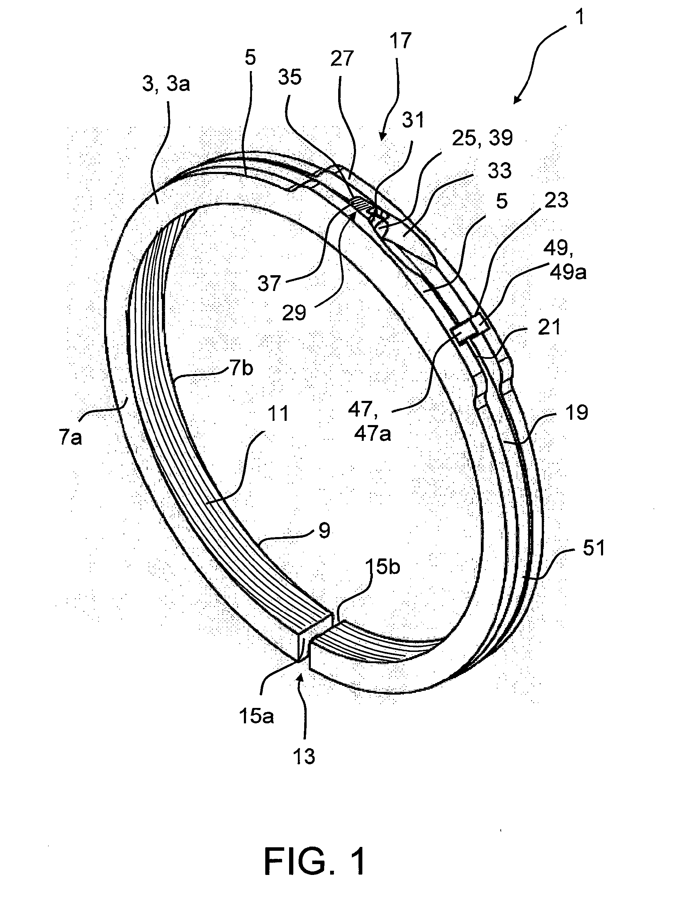

Eine in der Fig. 1 beispielhaft dargestellte Klemmspaltmutter 1 weist einen Grundkörper 3 in Form eines umfangsoffenen Rings 3a auf. Der Grundkörper 3 bzw. der Ring 3a weist eine Außenmantelwand 5, zwei gegenüberliegende Seitenwände 7a, 7b und eine Innenmantelwand 9 auf. Die Innenmantelwand 9 trägt ein Innengewinde 11. Der Ring 3a weist zwei voneinander beabstandete, aufeinander zuweisende, einen Spalt 13 des umfangsoffenen Rings 3a begrenzende Spaltwände 15a, 15b auf. Die Spaltwände 15a, 15b sind mittels einer Spannvorrichtung 17 gegeneinander verstellbar.

Zur Verstellung der Spaltwände 15a, 15b weist die Spannvorrichtung 17 im gezeigten Ausführungsbeispiel ein einzelnes, sich flexibel um einen den Spalt 13 überbrückenden Umfangsabschnitt des Grundkörpers 3 laufendes Zugmittel 19 auf.

Das Zugmittel 19 weist ein erstes Zugmittelende 21 auf. Das erste Zugmittelende 21 ist an einer ersten Umfangsstelle 23 des Rings 3a befestigt. Das Zugmittel 19 weist außerdem ein zweites Zugmittelende 25 auf, das bezüglich einer zweiten Umfangsstelle 27 des Rings 3a verstellbar gelagert ist.

Die Spannvorrichtung 17 weist eine Verstellvorrichtung 29 auf. Die Verstellvorrichtung 29 umfasst einen mit der zweiten Umfangsstelle 27 des Rings 3a verbundenen Sitz 31 auf. Der Sitz 31 trägt einen Innengewindesitz 33. In den Sitz 31 bzw. den Innengewindesitz 33 ist ein Stellmittel 35 verstellbar gelagert. Dazu ist das Stellmittel 35 mittels eines Außengewindes 37 drehbar längenverstellbar in dem Sitz 31 bzw. dem Innengewindesitz 33 gelagert. Das Stellmittel 35 kann eine Kronenmutter sein. Das Stellmittel 35 bzw. die Kronenmutter sitzt hinter einem Aufnahmenippel 39. Der Aufnahmenippel 39 bildet einstückig das zweite Zugmittelende 25 oder ist als separates Teil mit dem zweiten Zugmittelende 25 verbunden.

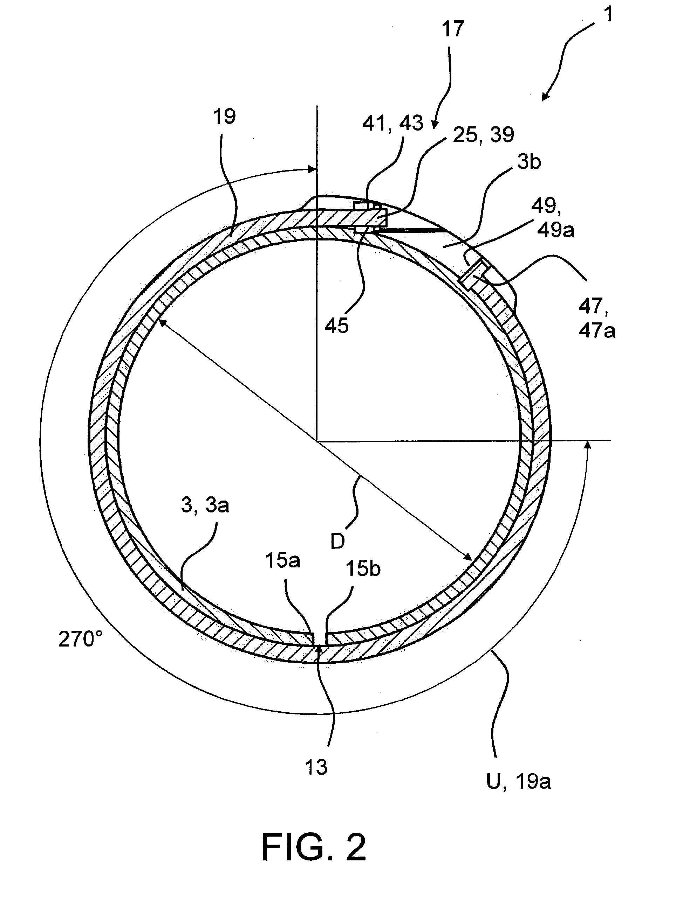

Das Stellmittel 35 weist, wie in Fig. 2 gezeigt, eine Aufnahme 41 auf, die im dargestellten Ausführungsbeispiel mit einer keil- oder kegelstumpfförmigen Innenwand 43 versehen ist.

Der Aufnahmenippel 39 trägt im dargestellten Ausführungsbeispiel eine keil- oder kegelstumpfförmige Außenwand 45. An der keil- oder kegelstumpfförmigen Außenwand 45 liegt das Stellmittel 35 bzw. die Kronenmutter formschlüssig an. Bezüglich des Stellmittels 35 ist der Aufnahmenippel 39 dabei jedoch verdrehbar gehalten.

An einem dem Aufnahmenippel 39 gegenüberliegendem Ende des Zugmittels 19, d.h. an dem ersten Zugmittelende 21 trägt das Zugmittel 19 einen Halteabschnitt 47, insbesondere einen Nippel 47a. Der Halteabschnitt 47 bzw. der Nippel 47a ist an einem Gegenhalteabschnitt 49, insbesondere einer Nippelaufnahme 49a an der ersten Umfangsstelle 23 des Rings 3a formschlüssig gehalten.

Das Zugmittel 19 ist um einen Umfangsabschnitt U des Grundkörpers 3 geführt, der den Umfang des Grundkörpers 3 um mehr als 270 Grad umfängt. Das Zugmittel 19 weist im dargestellten Ausführungsbeispiel einen Zugabschnitt auf, der um mehr als 270 Grad den Grundkörper 3 von außen umfängt. Das Zugmittel 19 kann durch ein Seil, insbesondere ein Stahlseil, einen Draht, insbesondere Stahldraht, eine Kette oder ein Nylon- oder Metallband, insbesondere Stahlband und/oder Federstahlband gebildet sein.

Das Zugmittel 19 bzw. der Zugabschnitt 19a ist in einer an den Querschnitt des Zugmittels 19 bzw. des Zugabschnitts 19a angepassten Nut 51 der Außenmantelwand 5 des Rings 3a geführt gelagert.

Der umfangsoffene Ring 3a weist einen verstärkten Ringabschnitt 3b auf, der gegenüber einem vom Zugmittel 19 bzw. vom Zugmittelabschnitt 19a umfangenen Ringabschnitt, d.h. Umfangsabschnitt U einen vergrößerten Querschnitt aufweist.

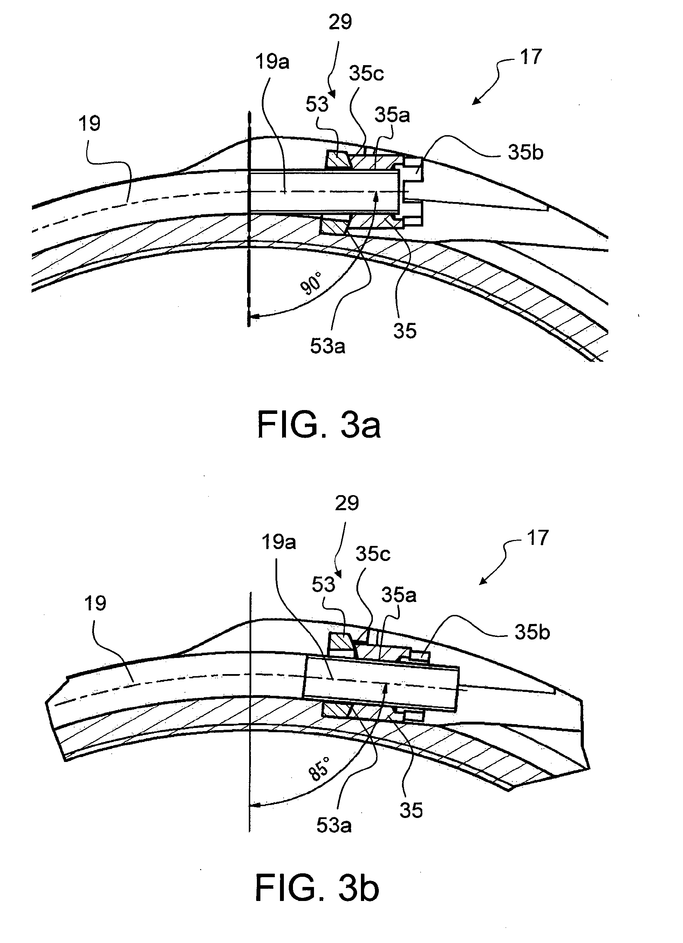

In der Fig. 3a und Fig. 3b ist eine variierte Ausführungsform einer Spannvorrichtung 17 dargestellt. Das Zugmittel 19 weist an seinem der Verstellvorrichtung 29 zugewandten Ende einen Außengewindeabschnitt 19b auf. Auf den Außengewindeabschnitt 19b ist das Verstellmittel 35 aufgeschraubt. Das Verstellmittel 35 weist ein zum Außengewindeabschnitt 19b passendes Innengewinde 35a und einen Kronenmutternkopf 35b auf. Mittels eines entsprechenden Schraubendrehers kann der Kronenmutternkopf 35b und damit auch die gesamte Kronenmutter, d.h. das Stellmittel gedreht und das Zugmittel 19 über den Außengewindeabschnitt 19b gespannt bzw. entspannt werden.

Die Fig. 3a zeigt die Spannvorrichtung 17 in einem entspannten Zustand. Die Fig. 3b zeigt die Spannvorrichtung 17 in einem verspannten Zustand. Die Verstellvorrichtung 29 weist an ihrem dem Kronenmutternkopf 35b abgewandten Bodenabschnitt eine konkave Ringsitzfläche 35c auf. An der konkaven Ringsitzfläche 35c liegt gleitfähig eine konvexe Ringsitzfläche 53a eines Ringsitzes 53 an. Die konvexe Ringsitzfläche 53a des Ringsitzes 53 bildet zusammen mit der konkaven Ringsitzfläche 35c der Verstellvorrichtung 29 einen Kugelgelenk oder ein Pfannengelenk. Die konvexe Ringsitzfläche 53a und die konkave Ringsitzfläche 35c befinden sich in einem unverspannten Zustand, wie in Fig. 3a dargestellt, in einer zueinander fluchtenden Ausrichtung, d.h. ihre Symmetrieachsen weisen dieselbe Orientierung auf. In der Fig. 3b ist die Verstellvorrichtung 29 in einem verspannten Zustand der Klemmspaltmutter 1 gezeigt. In diesem verspannten Zustand ist die Symmetrieachse der konkaven Ringsitzfläche 35c aus ihrer 90 Grad Orientierung gemäß Fig. 3a in eine ca. 85 Grad betragende Orientierung gemäß Fig. 3b verschwenkt angeordnet. Ein solches Verschwenken tritt auf, wenn die Spannvorrichtung 17 den starren Außengewindeabschnitt 19b des Zugmittels 19 gegen die kreisförmige Umfangsfläche des Ringes 3a bzw. der Nut 51 zieht. Durch eine solche gelenkige Anbindung können unerwünschte Biegespannungen an der Verstellvorrichtung 29 und dem Zugmittel 19 zumindest verringert, wenn nicht sogar verhindert werden.

Anders ausgedrückt kann bei der Ausführung gemäß Fig. 3 a und Fig. 3b eine Querkraft auf das Stellmittel 35, bzw. die Verstellvorrichtung 29 zumindest teilweise egalisiert werden. Durch eine Kugelscheibe, d.h. durch den Ringsitz 53 passt sich während des Spannens der Klemmspaltmutter 1 das Stellmittel 35, bzw. die Verstellvorrichtung 29 der natürlichen Verformung des Zugmittels 19 an. Dadurch wird das Innengewinde der Kronenmutter, d.h. am Kronenmutternkopf 35b zumindest im Wesentlichen nur auf Zug belastet.

### Bezugszeichenliste

- 1: Klemmspaltmutter
- 3: Grundkörper
- 3a: umfangsoffener Ring
- 3b: verstärkter Ringabschnitt
- 5: Außenmantelwand
- 7a, 7b: Seitenwände
- 9: Innenmantelwand
- 11: Innengewinde
- 13: Spalt
- 15a, 15b: Spaltwände
- 17: Spannvorrichtung
- 19: Zugmittel
- 19a: Zugmittelabschnitt
- 19b: Außengewindeabschnitt
- 21: erstes Zugmittelende
- 23: erste Umfangsstelle
- 25: zweites Zugmittelende
- 27: zweite Umfangsstelle
- 29: Verstellvorrichtung
- 31: Sitz
- 33: Innengewindesitz
- 35: Stellmittel
- 35a: Innengewinde
- 35b: Kronenmutternkopf
- 35c: konkave Ringsitzfläche
- 37: Außengewinde
- 39: Aufnahmenippel
- 41: Aufnahme
- 43: Innenwand
- 45: Außenwand
- 47: Halteabschnitt
- 47a: Nippel
- 49: Gegenhalteabschnitt
- 49a: Nippelaufnahme
- 51: Nut
- 53: Ringsitz
- 53a: konvexe Ringsitzfläche

## Patentansprüche

1. Klemmspaltmutter aufweisend einen Grundkörper (3) in Form eines umfangsoffenen Rings (3a), der eine Außenmantelwand (5), eine Innenmantelwand (9) mit einem Innendurchmesser (D) und zwei voneinander beabstandete, aufeinander zuweisende, einen Spalt (13) des umfangsoffenen Rings (3a) begrenzende Spaltwände (15a, 15b) aufweist, die mittels einer Spannvorrichtung (17) gegeneinander verstellbar sind, **dadurch gekennzeichnet, dass** die Spannvorrichtung (17) wenigstens ein sich flexibel um wenigstens einen den Spalt (13) überbrückenden Umfangsabschnitt (U) des Grundkörpers (3) legendes Zugmittel (19) aufweist.

2. Klemmspaltmutter nach Anspruch 1, **dadurch gekennzeichnet, dass** die Spannvorrichtung (17) und/oder das wenigstens eine Zugmittel (19) ein an einer ersten Umfangsstelle (23) des Rings (3a) befestigtes erstes Zugmittelende (21) und ein zweites Zugmittelende (25) aufweist, das bezüglich einer zweiten Umfangsstelle (27) des Rings (3a) verstellbar gelagert ist.

3. Klemmspaltmutter nach Anspruch 2, bei der die Spannvorrichtung (17) eine Verstellvorrichtung (29) aufweist, die ausgebildet ist, die Länge des wenigstens einen Zugmittels (19) zwischen der ersten Umfangsstelle (23) des Rings (3a) und der zweiten Umfangsstelle (27) des Rings (3a) zu verändern.

4. Klemmspaltmutter nach Anspruch 3, bei der die Verstellvorrichtung (29) einen mit der zweiten Umfangsstelle (27) des Rings (3a) verbundenen Sitz (31), insbesondere Innengewindesitz (33) aufweist, an dem ein Stellmittel (35) längenverstellbar, insbesondere drehbar mittels eines Außengewindes (37) längenverstellbar gelagert ist und das zweite Zugmittelende (25) an dem Stellmittel (35) gelagert ist.

5. Klemmspaltmutter nach Anspruch 4, bei der die Verstellvorrichtung (29), insbesondere das Stellmittel (35), eine Aufnahme (41), insbesondere mit einer keil- oder kegelstumpfförmigen Innenwand (43) aufweist, an der eine Außenwand (45), insbesondere eine keil- oder kegelstumpfförmige Außenwand (45) eines Aufnahmenippels (39) des zweiten Zugmittelendes (25) formschlüssig, insbesondere jedoch bezüglich des Stellmittels (35) verdrehbar gehalten ist.

6. Klemmspaltmutter nach einem der Ansprüche 2 bis 5, bei der das erste Zugmittelende (21) einen Halteabschnitt (47), insbesondere einen Nippel (47a) aufweist, der an einem Gegenhalteabschnitt (49), insbesondere einer Nippelaufnahme (49a) an der ersten Umfangsstelle (23) des Rings (3a) formschlüssig gehalten ist.

7. Klemmspaltmutter nach einem der Ansprüche 1 bis 6, bei der das Zugmittel (19) um einen Umfangsabschnitt (U) des Grundkörpers (3) geführt ist, der wenigstens 180 Grad, insbesondere wenigstens 270 Grad des Umfangs des Grundkörpers (3) umfängt.

8. Klemmspaltmutter nach einem der Ansprüche 2 bis 7, **dadurch gekennzeichnet, dass** der umfangsoffene Ring (3a) einen verstärkten Ringabschnitt (3b) aufweist, der gegenüber einem vom Zugmittel (19) umfangenen Ringabschnitt einen vergrößerten Querschnitt aufweist.

9. Klemmspaltmutter nach einem der Ansprüche 1 bis 8, **dadurch gekennzeichnet, dass** das Zugmittel (19) und/oder der wenigstens eine Zugmittelabschnitt (19a) in einer Nut (51), insbesondere in einer an den Querschnitt des Zugmittels (19) und/oder an den Querschnitt des wenigstens einen Zugmittelabschnitts (19a) angepassten Nut (51) der Außenmantelwand (5) des Rings (3a) geführt gelagert ist, wobei insbesondere alternativ oder ergänzend das Zugmittel (19) wenigstens einen Zugmittelabschnitt (19a) aufweisen kann, der durch ein Seil, insbesondere ein Stahlseil, einen Draht, insbesondere Stahldraht, eine Kette oder ein Nylon- oder Metallband, insbesondere Stahlband und/oder Federstahlband gebildet wird.

10. Klemmspaltmutter nach einem der Ansprüche 4 bis 9, **dadurch gekennzeichnet, dass** zwischen dem Zugmittel (19) und dem Stellmittel (35) ein Kugelgelenk oder Pfannengelenk ausgebildet ist.

## Claims

1. Clamping gap nut, having a basic body (3) in the form of a circumferentially open ring (3a) which has an outer casing wall (5), an inner casing wall (9) with an inside diameter (D) and two gap walls (15a, 15b) which are spaced apart from one another, point towards one another and delimit a gap (13) of the circumferentially open ring (3a) and which are adjustable with respect to one another by means of a tension device (17), **characterized in that** the tension device (17) has at least one traction means (19) which is laid flexibly around at least one circumferential portion (U), bridging the gap (13), of the basic body (3).

2. Clamping gap nut according to Claim 1, **characterized in that** the tension device (17) and/or the at least one traction means (19) have/has a first traction-means end (21) fastened to a first circumferential point (23) of the ring (3a) and a second traction-means end (25) which is mounted adjustably with respect to a second circumferential point (27) of the ring (3a).

3. Clamping gap nut according to Claim 2, in which the tension device (17) has an adjusting device (29) which is designed to vary the length of the at least one traction means (19) between the first circumferential point (23) of the ring (3a) and the second circumferential point (27) of the ring (3a).

4. Clamping gap nut according to Claim 3, in which the adjusting device (29) has a seat (31), in particular internally threaded seat (33), which is connected to the second circumferential point (27) of the ring (3a) and on which an actuating means (35) is mounted in a longitudinally adjustable manner, in particular in a longitudinally adjustable manner rotatably by means of an external thread (37), and the second traction-means end (25) is mounted on the actuating means (35).

5. Clamping gap nut according to Claim 4, in which the adjusting device (29), in particular the actuating means (35), has a receptacle (41), in particular with a wedge-shaped or frustoconical inner wall (43), on which an outer wall (45), in particular a wedge-shaped or frustoconical outer wall (45), of a reception nipple (39) of the second traction-means end (25) is held positively, but, in particular, rotatably with respect to the actuating means (35).

6. Clamping gap nut according to one of Claims 2 to 5, in which the first traction-means end (21) has a holding portion (47), in particular a nipple (47a), which is held positively on a holding-up portion (49), in particular a nipple receptacle (49a), at the first circumferential point (23) of the ring (3a).

7. Clamping gap nut according to one of Claims 1 to 6, in which the traction means (19) is lead around a circumferential portion (U) of the basic body (3), the circumferential portion encompassing at least 180 degrees, in particular at least 270 degrees, of the circumference of the basic body (3).

8. Clamping gap nut according to one of Claims 2 to 7, **characterized in that** the circumferentially open ring (3a) has a reinforced ring portion (3b) which has an enlarged cross section in relation to a ring portion encompassed by the traction means (19).

9. Clamping gap nut according to one of Claims 1 to 8, **characterized in that** the traction means (19) and/or the at least one traction-means portion (19a) are/is mounted in a guided manner in a groove (51), in particular in a groove (51), adapted to the cross section of the traction means (19) and/or to the cross section of the at least one traction-means portion (19a), of the outer casing wall (5) of the ring (3a), while, in particular alternatively or additionally, the traction means (19) may have at least one traction-means portion (19a) which is formed by a rope, in particular a steel rope, a wire, in particular a steel wire, a chain or a nylon or metal band, in particular steel band and/or spring-steel band.

10. Clamping gap nut according to one of Claims 4 to 9, **characterized in that** a ball joint or socket joint is formed between the traction means (19) and the actuating means (35).

## Revendications

1. Écrou de serrage à espacement, présentant un corps de base (3) sous la forme d'une bague ouverte sur la périphérie (3a) qui présente une paroi d'enveloppe extérieure (5), une paroi d'enveloppe intérieure (9) avec un diamètre intérieur (D) et deux parois d'espacement (15a, 15b) espacées l'une de l'autre, tournées l'une vers l'autre, délimitant un espacement (13) de la bague ouverte sur la périphérie (3a), lesquelles parois d'espacement peuvent être réglées l'une par rapport à l'autre au moyen d'un dispositif de serrage (17), **caractérisé en ce que** le dispositif de serrage (17) présente au moins un moyen de traction (19) se plaçant de manière flexible autour d'au moins une portion périphérique (U) du corps de base (3) surmontant l'espacement (13).

2. Écrou de serrage à espacement selon la revendication 1, **caractérisé en ce que** le dispositif de serrage (17) et/ou l'au moins un moyen de traction (19) présentent une première extrémité de moyen de traction (21) fixée au niveau d'un premier emplacement périphérique (23) de la bague (3a) et une deuxième extrémité de moyen de traction (25) qui est supportée de manière réglable par rapport à un deuxième emplacement périphérique (27) de la bague (3a).

3. Écrou de serrage à espacement selon la revendication 2, dans lequel le dispositif de serrage (17) présente un dispositif de réglage (29) qui est réalisé de manière à modifier la longueur de l'au moins un moyen de traction (19) entre le premier emplacement périphérique (23) de la bague (3a) et le deuxième emplacement périphérique (27) de la bague (3a).

4. Écrou de serrage à espacement selon la revendication 3, dans lequel le dispositif de réglage (29) présente un siège (31) connecté au deuxième emplacement périphérique (27) de la bague (3a), en particulier un siège à filetage interne (33), sur lequel est supporté de manière réglable en longueur un moyen de commande (35), en particulier de manière à pouvoir tourner au moyen d'un filetage extérieur (37), et la deuxième extrémité de moyen de traction (25) est supportée sur le moyen de commande (35).

5. Écrou de serrage à espacement selon la revendication 4, dans lequel le dispositif de réglage (29), en particulier le moyen de commande (35), présente un logement (41), en particulier avec une paroi interne en forme de cale ou de tronc de cône (43), au niveau de laquelle une paroi extérieure (45), en particulier une paroi extérieure (45) en forme de cale ou de tronc de cône, d'un raccord de réception fileté (39) de la deuxième extrémité de moyen de traction (25) est retenue par engagement par correspondance de formes, notamment toutefois de manière à pouvoir tourner par rapport au moyen de commande (35).

6. Écrou de serrage à espacement selon l'une quelconque des revendications 2 à 5, dans lequel la première extrémité de moyen de traction (21) présente une portion de retenue (47), en particulier un raccord fileté (47a), qui est retenu(e) au niveau d'une portion de retenue conjuguée (49), en particulier d'un logement de raccord fileté (49a), par engagement par correspondance de formes au niveau du premier emplacement périphérique (23) de la bague (3a).

7. Écrou de serrage à espacement selon l'une quelconque des revendications 1 à 6, dans lequel le moyen de traction (19) est guidé autour d'une portion périphérique (U) du corps de base (3) qui entoure, sur au moins 180°, en particulier sur au moins 270°, la périphérie du corps de base (3).

8. Écrou de serrage à espacement selon l'une quelconque des revendications 2 à 7, **caractérisé en ce que** la bague ouverte sur la périphérie (3a) présente une portion annulaire renforcée (3b) qui présente, par rapport à une portion annulaire entourée par le moyen de traction (19), une section transversale agrandie.

9. Écrou de serrage à espacement selon l'une quelconque des revendications 1 à 8, **caractérisé en ce que** le moyen de traction (19) et/ou l'au moins une portion de moyen de traction (19a) sont supportés de manière guidée dans une rainure (51), en particulier dans une rainure (51) de la paroi d'enveloppe extérieure (5) de la bague (3a) adaptée à la section transversale du moyen de traction (19) et/ou à la section transversale de l'au moins une portion de moyen de traction (19a), en particulier le moyen de traction (19), en variante ou en plus, pouvant présenter au moins une portion de moyen de traction (19a) qui est formée par un câble, en particulier un câble d'acier, un fil métallique, en particulier un fil d'acier, une chaîne ou une bande de nylon ou de métal, en particulier une bande d'acier et/ou une bande d'acier à ressort.

10. Écrou de serrage à espacement selon l'une quelconque des revendications 4 à 9, **caractérisé en ce qu'**entre le moyen de traction (19) et le moyen de commande (35) est réalisée une articulation sphérique ou une articulation à rotule.
